Europäisches Patentamt

European Patent Office

Office européen des brevets

(11) Numéro de publication: **0 222 643**
**A1**

(12) # DEMANDE DE BREVET EUROPEEN

(21) Numéro de dépôt: **86402248.8**

(22) Date de dépôt: **10.10.86**

(51) Int. Cl.⁴: **F 16 L 58/18**
**B 29 C 63/00**

(30) Priorité: **11.10.85 FR 8515078**

(43) Date de publication de la demande:
**20.05.87 Bulletin 87/21**

(84) Etats contractants désignés:
**AT BE CH DE ES GB IT LI LU NL SE**

(71) Demandeur: **HUTCHINSON**
**2 rue Balzac**
**F-75008 Paris(FR)**

(72) Inventeur: **Althabegoïty, Jean**
**26, rue de l'Ancien Palais**
**F-45200 Montargis(FR)**

(72) Inventeur: **Zermati, Charles**
**15, rue d'Aven**
**F-78310 Maurepas(FR)**

(74) Mandataire: **Orès, Bernard et al,**
**Cabinet ORES 6, Avenue de Messine**
**F-75008 Paris(FR)**

(54) Procédé et dispositif de jointoyage d'éléments de conduite de transport de fluide.

(57) Procédé et dispositif de jointoyage d'éléments de conduite de transport de fluide comportant un tube métallique et une couche anti-corrosion en un matériau élastomère ainsi que, le cas échéant, des moyens d'isolation thermique entourant ladite couche.

Pour ménager une couche anti-corrosion continue on rapporte un manchon (20) en un matériau de même nature que celui constitutif de la couche anti-corrosion (12), de préférence en le même matériau, rendu solidaire des tubes métalliques (11) des éléments adjacents (10₁, 10₂), par une opération de vulcanisation in situ conduite par mise en oeuvre d'un cycle thermique obtenu à l'aide de moyens (22) de chauffage par induction desdits tubes métalliques.

Application : Construction des pipe-lines, notamment de transport de pétrole de champs off-shore.

FIG. 2

EP 0 222 643 A1

- 1 -

L'invention a pour objet un procédé et un dispositif de jointoyage d'éléments de conduite de fluide.

Elle vise, en particulier, un procédé et un dispositif propres à être mis en oeuvre pour l'assemblage, sur
leur lieu de montage, d'éléments de conduites de transport de
fluide, en particulier, mais non exclusivement, du type de
celles utilisées pour le transport de fluides comme du gaz ou
de l'huile de champs pétroliers off-shore ou, encore, de conduites pour le transport de vapeur comme utilisées dans les
canalisations de chauffage urbain.

Les conduites ou canalisations de transport de
fluide du genre de celles mentionnées ci-dessus comprennent
généralement un tube métallique dont la surface externe est
garnie d'une couche anti-corrosion en un matériau élastomère
ou en une résine époxy solidaire dudit tube. Lorsque le fluide à transporter présente un gradient de température avec le
milieu environnant, la conduite ou canalisation est en outre
munie de moyens d'isolation thermique, le plus souvent une
gaine monocouche ou multicouches en un matériau à faible
coefficient de conductibilité thermique elle-même revêtue
d'une enveloppe externe de protection mécanique. Les éléments
ou tronçons de canalisation préfabriqués en usine comportent
au voisinage de leurs extrémités de courtes longueurs de tube
métallique dénudées, c'est-à-dire des parties non garnies de
la couche anti-corrosion et des moyens d'isolation thermique
pour permettre le soudage entre eux de tronçons ou éléments
adjacents.

Pour la construction sur le lieu d'utilisation, ou
au voisinage de celui-ci, d'une conduite ou canalisation destinée à être immergée, on soude entre eux des tronçons ou
éléments de canalisation adjacents et les tronçons ou éléments ainsi soudés sont ensuite jointoyés entre eux, soit à
terre, soit à bord d'une barge spécialement équipée pour la
pose de conduites sur fonds marins ou lacustres, l'opération
de jointoyage ayant pour but d'assurer la continuité de la couche anti-corrosion et, le cas échéant, des moyens d'isolation thermique au niveau des joints pour que soient remplies les conditions de sécurité imposées par les cahiers des charges relatifs à de telles conduites ou canalisations immergées et/ou enterrées.

On a déjà proposé, pour l'exécution de cette opération de jointoyage, de d'abord rapporter un primaire d'adhérisation sur la couche anti-corrosion puis recouvrir la zone de joint à l'aide de deux coquilles semi-cylindriques intérieurement garnies de polyuréthanne et maintenues en place sous pression, sur la canalisation, à l'aide de colliers, ces opérations précédant la mise en place d'un moule métallique qui a lieu après enlèvement des colliers et des coquilles dès début de la prise du polyuréthanne, ledit moule servant à la fabrication d'un joint ou manchon en un matériau à base de bi-composants, comme du polyuréthanne, injecté in situ, à froid. La durée de fabrication d'un tel joint est relativement longue, ce qui grève d'autant le coût de construction de la conduite ou de la canalisation, notamment lorsque l'assemblage est effectué sur une barge dont les frais d'exploitation sont importants ; en outre il n'est pas toujours possible d'assurer un résultat satisfaisant en raison, notamment, des difficultés inhérentes à la réalisation d'une bonne adhésion du matériau constitutif du manchon sur des tubes métalliques humides d'une part et, d'autre part, en raison des différences de nature des matériaux constitutifs de la couche anti-corrosion mise en place en usine et du manchon qui font que l'on n'obtient pas une adhérence parfaite du manchon et de ladite couche en particulier dans les zones de raccordement de ladite couche et des extrémités du manchon qui sont celles où les risques sont les plus importants.

Pour pallier l'inconvénient mentionné en dernier lieu ci-dessus, à savoir celui de la différence de nature des matériaux constitutifs de la couche anti-corrosion proprement dite et du manchon rapporté au droit de la zone de joint, on a déjà proposé, dans le cas de tubes métalliques garnis d'une couche anti-corrosion en résine époxy de faible épaisseur, de l'ordre de 200 à 500 µ, de former ledit manchon en la même résine époxy que celle déposée en usine sur l'élément ou tronçon de conduite.

Dans un mode opératoire connu, on porte les extrémités réunies par soudure de deux éléments de tubes adjacents à une température de l'ordre de 200 à 250°C, soit à l'aide d'une torche, soit en faisant application de phénomènes d'induction électrique et l'on projette ensuite sur les parties chauffées de la résine époxy en poudre qui est ainsi fixée au tube métallique par adhérisation par fusion, suivant un processus communément désigné en anglais sous le nom de FBE (Fusion Bonded Epoxy).

Un tel procédé, dans lequel le tube métallique est chauffé par une impulsion brutale, ne peut pas être mis en oeuvre pour le jointoyage d'éléments de canalisation comportant en tant que couche anti-corrosion un matériau élastomère fixé sur le tube métallique à l'aide d'un ou de primaires d'adhérisation et muni en outre de moyens d'isolation thermique et cela parce que le chauffage sans précautions des extrémités des éléments de tubes adjacents risquerait d'endommager lesdits moyens d'isolation ainsi que le ou les primaires d'adhérisation. De plus, et en raison de la manière même dont est apportée la résine époxy constitutive du manchon, c'est-à-dire par projection, le procédé ne permet pas l'obtention d'une épaisseur régulière et constante dudit manchon propre à assurer la continuité uniforme voulue de la couche anti-corrosion.

Le problème restait donc entier de fournir un procédé et un dispositif permettant de pallier les inconvénients des procédés connus d'injection à froid de bi-composants comme du polyuréthanne ou les inconvénients des procédés connus d'adhérisation d'une résine par fusion, en particulier pour l'obtention d'un jointoyage satisfaisant de tronçons ou éléments de conduite à tube métallique comportant une

0222643

- 4 -

couche anti-corrosion en matériau élastomère mais également des moyens d'isolation thermique entourant ladite couche.

Ce problème a maintenant été résolu par la Demanderesse qui propose un procédé pour le jointoyage d'éléments de conduite de transport de fluide comportant un tube métallique et une couche anti-corrosion en un matériau élastomère ainsi que, le cas échéant, des moyens d'isolation thermique entourant ladite couche dans lequel on effectue la soudure des extrémités des tubes métalliques adjacents et dans lequel on forme ensuite un manchon sensiblement au droit desdites extrémités, caractérisé en ce que, pour ménager une couche anti-corrosion continue, ledit manchon est en un matériau de même nature que celui constitutif de la couche anti-corrosion, de préférence en le même matériau, rendu solidaire des tubes métalliques des éléments adjacents par une opération de vulcanisation in situ conduite par mise en oeuvre d'un cycle thermique obtenu à l'aide de moyens de chauffage par induction desdits tubes métalliques.

Dans une forme de réalisation avantageuse, le manchon, dont la vulcanisation in situ est caractéristique du procédé selon l'invention, est déposé initialement sous forme d'une couche d'élastomère cru de même nature et avantageusement de même composition que celui constitutif de la couche anti-corrosion préalablement fixée en usine sur les tronçons ou éléments de conduite à assembler, dans certains cas, un matériau du type polyuréthanne, le manchon ayant une épaisseur sensiblement égale à celle de ladite couche et étant rapporté sur les extrémités nues des tubes métalliques après traitement desdites extrémités par un processus en soi connu identique à celui mis en oeuvre pour la fabrication des éléments en usine.

Un dispositif pour la mise en oeuvre du procédé selon l'invention comprend alors des moyens propres à créer par induction l'échauffement voulu dans les tubes métalliques aboutés adjacents, avantageusement sous forme d'un bobinage, et des moyens pour l'alimentation et la commande suivant un cycle prédéterminé de la puissance induite fournie audit bobinage.

Dans une forme de réalisation, le bobinage d'induction est sous forme d'une multiplicité de spires lesquelles sont mises en place autour d'un tube et déplacées le long de celui-ci au fur et à mesure de la construction de la conduite ou canalisation.

Dans une variante, le bobinage d'induction est réalisé sous forme d'une pince articulée, à deux demi-coquilles, de sorte que le dispositif peut être mis en place au droit d'une zone de jointoyage puis retiré de ladite zone par ouverture des demi-coquilles pour être transporté à une autre extrémité de tube à jointoyer.

On fournit ainsi un procédé et un dispositif qui réduisent considérablement le temps nécessaire pour l'obtention d'un jointoyage satisfaisant de deux éléments aboutés de conduite de transport de fluide, notamment eu égard à la continuité de la couche anti-corrosion.

On fournit également ainsi un procédé et un dispositif pour sa mise en oeuvre qui permettent d'obtenir les résultats mentionnés ci-dessus nonobstant les conditions régnant sur les chantiers de construction des conduites, en particulier en ce qui concerne l'humidité.

L'invention sera bien comprise par la description qui suit, faite à titre d'exemple et en référence au dessin annexé dans lequel :

- la figure 1 est une vue en perspective, schématique, d'un dispositif pour la mise en oeuvre du procédé selon l'invention ;

- la figure 2 est une vue schématique en coupe longitudinale montrant deux éléments de conduite aboutés et les moyens pour la réalisation d'un jointoyage selon l'invention ;

- la figure 3 est une vue analogue à celle de la figure 2 mais pour une variante de réalisation.

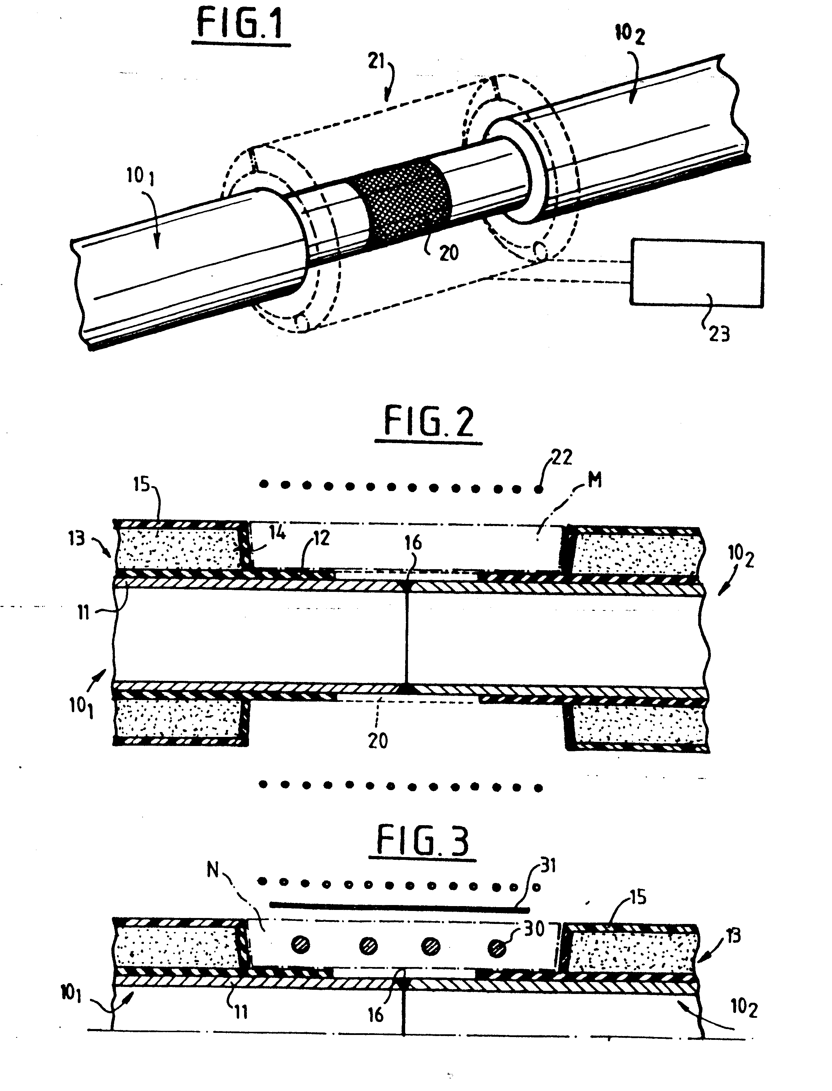

Pour la construction d'une conduite de transport de fluide, par exemple et sans que cette indication ait quelque caractère limitatif que ce soit, pour le transport de fluide comme du gaz ou de l'huile de champs pétroliers off-shore, ou pour le transport de fluides caloporteurs comme ceux utilisés dans les canalisations de chauffage urbain, on procède sur un chantier de construction, ou au voisinage de celui-ci, au jointoyage d'éléments adjacents $10_1$ et $10_2$, préfabriqués en usine et qui comprennent chacun un tube métallique 11 garni d'une couche anti-corrosion 12 en un matériau élastomère elle-même entourée de moyens d'isolation thermique montrés schématiquement en 13 et qui peuvent être constitués par une gaine 14 en un ou des matériaux lacunaires sur laquelle est rapportée une couche de protection externe 15. Pour permettre d'effectuer la soudure 16 de deux éléments $10_1$ et $10_2$ aboutés, les éléments $10_1$ et $10_2$ sont préfabriqués en usine de manière à présenter au voisinage de leurs extrémités de courtes longueurs de tube métallique 11 dénudées, c'est-à-dire non garnies de la couche anti-corrosion 12 et des moyens d'isolation thermique 13, figure 2. La longueur de la partie métallique à nu peut être de l'ordre de 15 à 18 cm, et celle de la zone recouverte de la couche anti-corrosion uniquement du même ordre de grandeur, pour des éléments de douze mètres de long environ.

La soudure effectuée, on procède au jointoyage proprement dit.

Selon l'invention, on prévoit pour ce faire de former, au droit de la zone de contact des extrémités de deux éléments adjacents, un manchon 20 en un matériau de même nature que celui constitutif de la couche anti-corrosion 12, de préférence en le même matériau, ledit manchon étant rendu solidaire des tubes métalliques 11 des éléments adjacents $10_1$ et $10_2$ par une opération de vulcanisation in situ conduite par mise en oeuvre d'un cycle thermique obtenu à l'aide de moyens 21 de chauffage par induction desdits tubes métalliques.

De tels moyens de chauffage par induction sont bien connus et ne seront pas décrits ici de façon détaillée.

Ils peuvent être réalisés sous forme d'un bobinage d'induction 22 relié à des moyens 23 d'alimentation et de contrôle de la puissance induite.

En variante, les moyens 21 sont sous forme d'une pince articulée, à deux demi-coquilles, reliées aux moyens 23, le dispositif pouvant alors être mis en place au droit d'une zone de jointoyage puis retiré de ladite zone par ouverture des demi-coquilles pour être transporté à une autre extrémité de tube à jointoyer.

De façon plus précise, après soudure des parties aboutées des extrémités des éléments $10_1$ et $10_2$, la surface externe des tubes métalliques 11 est soumise à un traitement de préparation mécanique, par sablage ou grenaillage puis, le cas échéant après séchage de la surface métallique externe à l'aide des moyens 21, à un traitement de préparation chimique destiné à permettre l'adhésion du manchon prévu pour former la continuité de la couche anti-corrosion 12. Ce traitement de préparation chimique, en soi connu, et qui consiste généralement en la pose d'un ou de primaires d'adhésion dont les solvants peuvent également être rapidement éliminés par chauffage à l'aide des moyens 21, est suivi par la pose d'une couche d'élastomère cru de même nature et avantageusement de même composition que celle du matériau constitutif de la couche 12, dans certains cas, un matériau du type polyuréthanne. Après mise en place de cette couche celle-ci est vulcanisée, in situ, suivant un cycle thermique propre à assurer un processus de vulcanisation satisfaisant, le réglage et le contrôle de la puissance thermique à l'aide des moyens 23 pouvant être obtenus à l'aide de sondes, non représentées, disposées au voisinage du joint et qui peuvent être soit retirées après fin du cycle soit laissées en place.

Pour l'obtention de la pression nécessaire au cours de la vulcanisation du manchon d'élastomère on prévoit d'entourer le manchon cru d'une bande de tissu dont le rétreint, au cours du chauffage, procure les forces de pression recherchées d'application du manchon sur le tube métallique garni d'un ou de primaire(s) d'adhérisation.

On obtient ainsi, par le procédé selon l'invention, simultanément l'adhérisation sur le tube 11 du manchon 20 et la vulcanisation de celui-ci.

Après exécution des opérations mentionnées ci-dessus, qui se traduisent par la formation sur les tubes métalliques 11 d'une couche anti-corrosion 12 continue, uniforme quant à son épaisseur et à ses autres caractéristiques aussi bien sur les éléments préfabriqués en usine qu'au droit de la zone de joint, comme montré schématiquement en tirets sur la figure 2, on rapporte sur ladite couche les moyens d'isolation thermique M propres à assurer la continuité de ceux rapportés en usine sur lesdits éléments (montrés schématiquement et partiellement en trait mixte sur cette figure).

Lorsque de tels moyens comprennent des parties en élastomère, par exemple sous forme de feuilles ou couches prévues pour la solidarisation entre eux de blocs ou analogues en matériau isolant lacunaire, l'invention prévoit avantageusement de faire application des moyens 21-23 pour assurer la vulcanisation desdites couches ou feuilles d'élastomères.

Le procédé et le dispositif selon l'invention permettent de considérablement raccourcir, par rapport aux procédés et dispositifs connus, le temps nécessaire à l'obtention d'un joint de qualité satisfaisante.

Ainsi, le procédé et le dispositif selon l'invention permettent-ils à l'aide des moyens 23 de commander et contrôler simplement le cycle de vulcanisation, opération jusqu'alors difficilement réalisable à l'aide de cordons chauffants électriques, qui agissant à partir de l'extérieur du tube, ont leurs effets limités par l'épaisseur du produit à vulcaniser d'une part et, d'autre part, provoquent fréquemment la destruction de l'élastomère lorsque la température est augmentée pour essayer de réduire le temps de travail.

De même, la possibilité qu'offrent le procédé et le dispositif de la Demande de pouvoir régler et moduler la puissance thermique dissipée permet-elle de s'affranchir des inconvénients liés à l'utilisation d'une torche et cela compte tenu du fait que le ou les primaire(s) d'adhérisation doit (doivent) être rapporté(s) sur le tube métallique à une température très nettement différente de celle mise en oeuvre pour la vulcanisation.

Complémentairement, l'utilisation dans le procédé et le dispositif selon l'invention d'une bobine sous forme d'un solénoïde continu ou sous forme de deux demi-coquilles (comme montré schématiquement en trait mixte sur la figure 1) à puissance d'induction réglable permet de définer, à volonté, et pour chaque point du manchon 20, une courbe de température en fonction de la distance au plan de joint de deux éléments adjacents, de sorte que l'on peut à la fois réaliser une bonne adhérisation dudit manchon sur le tube métallique et éviter que ne soient endommagées les parties de la couche anticorrosion et/ou les moyens d'isolation thermique dans les zones d'extrémité des parties dénudées sur les tubes métalliques.

Le procédé et le dispositif selon l'invention permettent également, comme indiqué ci-dessus, de réaliser simultanément la continuité de la couche anti-corrosion 12 et la continuité de la totalité ou d'une partie des moyens d'isolation thermique 13.

Il en est ainsi, par exemple, dans une réalisation illustrée sur la figure 3 dans laquelle l'apport calorifique qui peut être nécessaire pour la formation desdits moyens 13 est obtenu à l'aide d'éléments conducteurs comme des fils métalliques 30 noyés dans le matériau N rapporté pour former lesdits moyens d'isolation, la puissance induite étant en outre limitée et contrôlée à l'aide d'écrans comme 31 en acier inox ou en aluminium.

Dans une autre forme de réalisation, l'apport de calories au sein du matériau constitutif des moyens d'isolation thermique 13 est obtenu en incorporant audit matériau non plus des conducteurs métalliques comme 30 mais des éléments conducteurs qui contribuent également à l'obtention de bonnes caractéristiques mécaniques, comme des fibres de carbone ou analogues.

Un procédé et un dispositif selon l'invention ont été mis en oeuvre pour le jointoyage d'éléments de canalisation d'un pipe-line de quatre pouces (10 cm de diamètre) comprenant sur le tube métallique proprement dit constitutif du pipe-line une couche anti-corrosion en polychloroprène d'environ 4 mm d'épaisseur entourée d'une gaine en matériau isolant en mousse de PVC disposée suivant des couches réunies entre elles par un élastomère du même type que celui constitutif de ladite couche anti-corrosion.

D'excellents résultats ont été obtenus en utilisant comme primaire d'adhérisation un produit vendu par la Société LORD CHEMICAL PRODUCTS (une Société des U.S.A.) sous la dénomination "CHEMLOCK" ou un produit vendu par la Société HENKEL sous la dénomination "CHEMOSIL", rapporté après séchage des parties métalliques du pipe-line à l'aide des moyens 21-23 et lui-même séché à l'aide desdits moyens à une température de l'ordre de 60 à 70°C. Après augmentation de la température aux environs de 105-115°C, température à laquelle l'élastomère est rendu adhérent au CHEMOSIL, et qui est conservée pendant un certain temps, on procède à la vulcanisation de l'élastomère à une température comprise entre 120 et 160°C, l'adhérisation et la vulcanisation du manchon en polychloroprène de 4 mm d'épaisseur étant conduite à l'aide d'un appareillage à induction fonctionnant à la fréquence de 50 Hz pour une élévation de température de 30°C/minute.

REVENDICATIONS

1°) Procédé de jointoyage d'éléments de conduite de transport de fluide comportant un tube métallique et une couche anti-corrosion en un matériau élastomère ainsi que, le cas échéant, des moyens d'isolation thermique entourant ladite couche, dans lequel on effectue la soudure des extrémités des tubes métalliques adjacents et dans lequel on forme ensuite un manchon sensiblement au droit desdites extrémités, caractérisé en ce que, pour ménager une couche anti-corrosion continue, ledit manchon (20) est en un matériau de même nature que celui constitutif de la couche anti-corrosion (12), de préférence en le même matériau, rendu solidaire des tubes métalliques (11) des éléments adjacents ($10_1$, $10_2$), par une opération de vulcanisation in situ conduite par mise en oeuvre d'un cycle thermique obtenu à l'aide de moyens (21-23) de chauffage par induction desdits tubes métalliques.

2°) Procédé selon la revendication 1, caractérisé en ce que le manchon (20) dont la vulcanisation est conduite in situ est déposé initialement sous forme d'une couche d'élastomère cru de même nature et avantageusement de même composition que celui constitutif de la couche anti-corrosion (12) préalablement fixée sur les tronçons ($10_1$, $10_2$) à assembler, le manchon ayant une épaisseur sensiblement égale à celle de ladite couche (12) et étant rapporté sur les extrémités nues des tubes métalliques après traitement desdites extrémités par un processus en soi connu identique à celui mis en oeuvre pour la fabrication des éléments en usine.

3°) Procédé selon l'une quelconque des revendications précédentes, caractérisé en ce que, simultanément à la vulcanisation in situ du manchon (20) on effectue à l'aide desdits moyens de chauffage par induction un traitement thermique requis pour la réalisation desdits moyens d'isolation thermique dans ladite zone de jointoyage.

4°) Procédé selon la revendication 3, caractérisé en ce que l'on prévoit, dans le matériau destiné à former lesdits moyens d'isolation thermique, des éléments conducteurs (30) comme des fils métalliques, des fibres de carbone ou analogues, qui sont incorporés dans ledit matériau.

5°) Procédé selon l'une quelconque des revendications précédentes, caractérisé en ce qu'on prévoit pour la commande et le réglage desdits moyens de chauffage par induction (21-23) des sondes disposées au voisinage des tubes métalliques dans la zone de jointoyage.

6°) Procédé selon l'une quelconque des revendications précédentes, caractérérisé en ce que la puissance thermique dissipée par induction est en outre contrôlée et/ou commandée à l'aide d'écrans ou analogues de forme et de nature appropriées.

7°) Procédé selon l'une quelconque des revendications précédentes, dans lequel on prévoit, de façon en soi connue, de fournir les forces de pression nécessaires à l'application du manchon sur le tube métallique à l'aide d'une enveloppe garnissant la face externe du manchon (20), caractérisé en ce que ladite enveloppe est une bande de tissu subissant un rétreint lors de la vulcanisation in situ du manchon.

8°) Procédé selon la revendication 1, caractérisé en ce que le manchon est en un matériau du type polyuréthanne.

9°) Dispositif pour la mise en oeuvre du procédé selon l'une quelconque des revendications précédentes, caractérisé en ce qu'il comprend des moyens (21-23) de chauffage par induction et des moyens pour l'alimentation et la commande suivant un cycle prédéterminé de la puissance induite fournie auxdits moyens de chauffage (21).

10°) Dispositif selon la revendication 9, caractérisé en ce que lesdits moyens de chauffage sont sous forme d'un bobinage d'induction (22) comprenant une multiplicité de spires.

11°) Dispositif selon la revendication 10, caractérisé en ce que le bobinage d'induction est sous forme d'une pince articulée, à deux demi-coquilles.

12°) Dispositif selon l'une quelconque des revendications 9 à 11, caractérisé en ce qu'il comprend en outre des moyens d'écrans pour la commande et/ou la régulation de la puissance thermique dissipée par induction.

13°) Ensemble d'éléments de canalisation et/ou de conduite, notamment de transport de fluide, obtenu par mise en oeuvre du procédé selon l'une quelconque des revendications 1 à 8 et/ou à l'aide du dispositif selon l'une quelconque des revendications 9 à 12.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | EP-A-0 148 652  (HUTCHINSON S.A.) <br> * Figure 4; page 7, lignes 8-33; page 8, lignes 15-26; page 12, ligne 32 - page 13, ligne 3; page 13, lignes 15-26; page 17, ligne 16 - page 18, ligne 7 * | 1 | F 16 L   58/18 <br> B 29 C   63/00 |
| A | | 2,7,12 | |
| A | WO-A-8 501 245  (SOCIETE INDUSTRIELLE D'ISOLATIONS) <br> * Revendications 1,4 * | 1 | |
| A | FR-A-2 369 913  (PROGRESS PROCESSING LTD) <br> * Page 12, lignes 23-25 * | 2 | |
| A | GB-A- 660 254  (NORMAN & NORDAC LTD) <br> * Figures; page 1, ligne 83 - page 2, ligne 4 * | 4 | **DOMAINES TECHNIQUES RECHERCHES (Int Cl 4)** <br> F 16 L <br> B 29 C |
| A | US-A-2 786 264  (R. COLOMBO) | | |

Le present rapport de recherche a été établi pour toutes les revendications

| Lieu de la recherche <br> LA HAYE | Date d'achèvement de la recherche <br> 13-01-1987 | Examinateur <br> NARMINIO A. |
|---|---|---|